# EUROPEAN PATENT APPLICATION

(11) **EP 4 651 269 A1**
(43) Date of publication of application: **19.11.2025**
(21) Application number: 24197647.1
(22) Date of filing: 30.08.2024
(51) Int. Cl.: H01M 10/613, H01M 10/625, H01M 10/647, H01M 10/6554, H01M 50/209, H01M 50/258

(54) **BATTERY PACK AND VEHICLE**

(30) Priority: 15.05.2024 CN 202421066829 U; 16.07.2024 WO PCT/CN2024/105736
(71) Applicant: Eve Energy Co., Ltd., Huizhou, Guangdong 516006 (CN)
(72) Inventor: FU, Weiyin, Huizhou (CN); ZHANG, Minglang, Huizhou (CN)
(74) Representative: Murgitroyd & Company

(57) **Abstract**

The disclosure provides a battery pack (100) and vehicle. The battery pack (100) includes a framework (110) and a plurality of battery modules (120); the framework (110) includes a mounting cavity (1100) and a plurality of supporting structures (1130) arranged in a height direction (Z) of the framework (110); the plurality of battery modules (120) are arranged in the mounting cavity (1100) in the height direction (Z), and each of the battery modules (120) includes a frame (121) and a plurality of cells (122) disposed in the frame (121); and each of a plurality of connecting structures (1212) of a plurality of frames (121) is connected to one of the plurality of supporting structures (1130).

## Description

### TECHNICAL FIELD

The disclosure relates to the field of battery, and in particular, to a battery pack and a vehicle.

### BACKGROUND

In related art, in order to increase the capacity of a battery pack, the battery pack is provided with a plurality of battery modules that are stacked and installed in a framework of the battery pack. Generally, liquid cooling plates are used to support the battery modules in the framework.

### SUMMARY

Since the liquid cooled plates have lower strength, they are prone to deformation under the gravity of the battery modules, which affects the connection stability of the battery modules and the framework.

Embodiments of the disclosure provide a battery pack, including:
a framework including a mounting cavity and a plurality of supporting structures, in which the plurality of supporting structures are arranged in a height direction of the framework; and
a plurality of battery modules arranged in the mounting cavity in the height direction, in which each of the plurality of battery modules includes a frame and a plurality of cells disposed in the frame; and each of a plurality of connecting structures of a plurality of frames is connected to one of the plurality of supporting structures.

Embodiments of the disclosure further provide a vehicle including a battery pack, in which the battery pack includes:
a framework including a mounting cavity and a plurality of supporting structures, in which the plurality of supporting structures are arranged in a height direction of the framework; and
a plurality of battery modules arranged in the mounting cavity in the height direction, in which each of the plurality of battery modules includes a frame and a plurality of cells disposed in the frame; and each of a plurality of connecting structures of a plurality of frames is connected to one of the plurality of supporting structures.

In the battery pack provided by some embodiments of the disclosure, the frame of each of the battery modules is provided with the connecting structure, and the framework is provided with the plurality of supporting structures arranged in the height direction of the framework, and each of the plurality of connecting structures of the plurality of frames is connected to one of the plurality of supporting structures, so that the plurality of battery modules are supported in the mounting cavity of the framework. Moreover, since the frames of the battery modules have higher strength and are not prone to deformation under the gravity of the battery modules, it is conducive to improving the connection stability of the battery modules and the framework. Additionally, because the battery modules are supported by the framework through the frames, the pressure on liquid cooling plates of the battery modules is reduced, the risk of deformation of the liquid cooling plates is reduced, and the stability of the liquid cooling plates is improved.

In the vehicle provided by some embodiments of the disclosure, the frame of each of the battery modules is provided with the connecting structure, and the framework is provided with the plurality of supporting structures arranged in the height direction of the framework, and each of the plurality of connecting structures of the plurality of frames is connected to one of the plurality of supporting structures, so that the plurality of battery modules are supported in the mounting cavity of the framework. Moreover, since the frames of the battery modules have higher strength and are not prone to deformation under the gravity of the battery modules, it is conducive to improving the connection stability of the battery modules and the framework. Additionally, because the battery modules are supported by the framework through the frames, the pressure on liquid cooling plates of the battery modules is reduced, the risk of deformation of the liquid cooling plates is reduced, the stability of the liquid cooling plates is improved, and the safety performance of the vehicle is enhanced.

### BRIEF DESCRIPTION OF THE DRAWINGS

FIG. 1 is a schematic structural diagram of a battery pack provided by some embodiments of the disclosure.
FIG. 2 is a cross-sectional view taken in a direction A-A in FIG. 1.
FIG. 3 is an enlarged view at position A in FIG. 2.
FIG. 4 is a cross-sectional view taken in a direction B-B in FIG. 1.
FIG. 5 is a schematic exploded diagram of a framework and a plurality of battery modules provided by some embodiments of the disclosure.

### Reference numerals:

100, battery pack; 110, framework; 1100, mounting cavity; 1101, first mounting opening; 1102, second mounting opening; 1103, third mounting opening; 111, supporting beam; 112, crossbeam; 1130, supporting structure; 1131, supporting part; 1132, supporting protrusion; 114, limiting structure; 1141, limiting part; 120, battery module; 121, frame; 1211, end plate; 1212, connecting structure; 1213, connecting part; 1214, connecting protrusion; 122, cell; 123, liquid cooling plate; 124, cover plate; 130, sealing plate; 140, locking member; X, first direction; Y, second direction; and Z, height direction.

### DETAILED DESCRIPTION

In related art, in order to increase the capacity of a battery pack, the battery pack is provided with a plurality of battery modules that are stacked and installed in a framework of the battery pack. Generally, liquid cooling plates are used to support the battery modules in the framework. However, since the liquid cooling plates have lower strength, they are prone to deformation under the gravity of the battery modules, affecting the connection stability of the battery modules and the framework. Moreover, the deformation of the liquid cooling plates may cause the internal cooling pipelines to bend or even break, affecting the performance of the liquid cooling plates, and even resulting in liquid leakage from the liquid cooling plates.

In order to improve the above problem(s), the embodiments of the disclosure provide a battery pack and a vehicle, which will be described in the following.

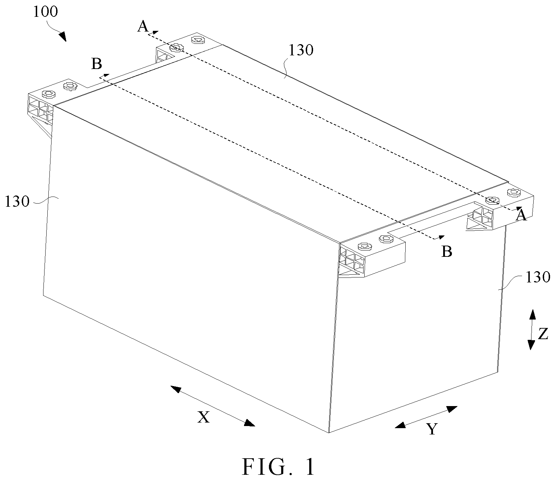

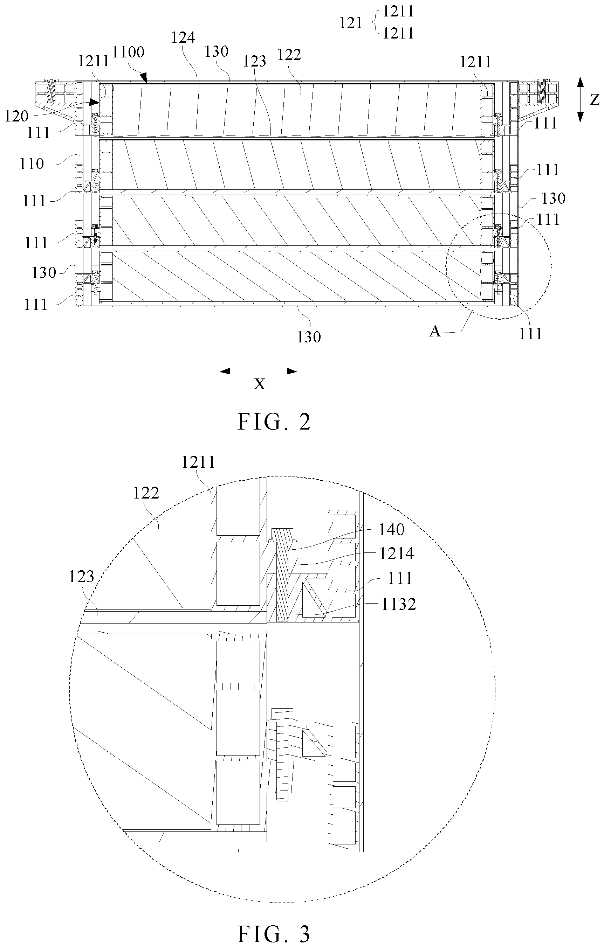

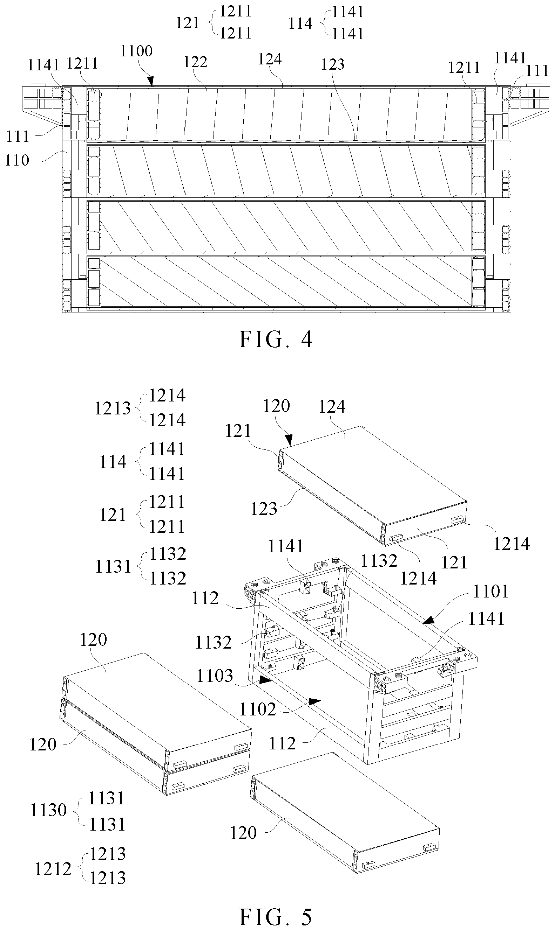

FIG. 1 is a schematic structural diagram of a battery pack provided by some embodiments of the disclosure, FIG. 2 is a cross-sectional view taken in a direction A-A in FIG. 1, FIG. 3 is an enlarged view at position A in FIG. 2, FIG. 4 is a cross-sectional view taken in a direction B-B in FIG. 1, and FIG. 5 is a schematic exploded diagram of a framework and a plurality of battery modules provided by some embodiments of the disclosure. As illustrated in FIG. 1 and FIG. 2, a battery pack 100 includes a framework 110 and a plurality of battery modules 120. The framework 110 includes a mounting cavity 1100. The plurality of battery modules 120 are arranged in the mounting cavity 1100 in a height direction Z of the framework 110. As illustrated in FIG. 1, FIG. 2, and FIG. 5, the framework 110 includes a plurality of supporting structures 1130 arranged in the height direction Z of the framework 110. The plurality of supporting structures 1130 are connected to the plurality of battery modules 120 in one-to-one correspondence, so as to support the plurality of battery modules 120. In some embodiments, the plurality of supporting structures 1130 may be arranged in sequence or distributed in misalignment in the height direction Z of the framework 110.

As illustrated in FIG. 2 and FIG. 5, each of the battery modules 120 includes a frame 121 and a plurality of cells 122 disposed in the frame 121. In some embodiments, the plurality of cells 122 are stacked in the first direction X. In some embodiments, the frame 121 of each of the battery modules 120 is provided with a connecting structure 1212, and a plurality of connecting structures 1212 of a plurality of frames 121 are connected to the plurality of supporting structures 1130 in one-to-one correspondence, so that the plurality of supporting structures 1130 are connected to the plurality of battery modules 120 in one-to-one correspondence.

In the battery pack 100 provided by some embodiments of the disclosure, the frame 121 of each of the battery modules 120 is provided with the connecting structure 1212, and the framework 110 is provided with the plurality of supporting structures 1130 arranged in the height direction Z of the framework 110, and the plurality of connecting structures 1212 of the plurality of frames 121 are connected to the plurality of supporting structures 1130 in one-to-one correspondence, so that the plurality of battery modules 120 are supported in the mounting cavity 1100 of the framework 1100. Moreover, since the frames 121 of the battery modules 120 have higher strength and are not prone to deformation under the gravity of the battery modules 120, it is conducive to improving the connection stability of the battery modules 120 and the framework 110. Additionally, because the battery modules 120 are supported by the framework 110 through the frames 121, the pressure on liquid cooling plates of the battery modules 120 is reduced, the risk of deformation of the liquid cooling plates is reduced, and the stability of the liquid cooling plates is improved.

In some embodiments, as illustrated in FIGs. 2 to 5, each of the supporting structures 1130 disposed in the framework 110 may include two supporting parts 1131 arranged at two opposite sides of the mounting cavity 1100 in a first direction X, respectively. An angle is formed between the first direction X and the height direction Z of the framework 110. For example, the angle formed between the first direction X and the height direction Z of the framework 110 may be a right angle or an acute angle.

In some embodiments, each of the connecting structures 1212 includes two connecting parts 1213 arranged at two opposite sides of corresponding one of the frames 121 in the first direction X, respectively. Two connecting parts 1213 of each of the connecting structures 1212 are connected to two supporting parts 1131 of corresponding one of the supporting structures 1130, respectively. Thus, each of the supporting structures 1130 can support one of the frames 121 at two opposite ends thereof in the first direction X, which improves the connection stability of the supporting structures 1130 and the frames 121.

As illustrated in FIG. 2 to FIG. 4, each of the frames 121 includes two end plates 1211 arranged opposite to each other. The two end plates 1211 are arranged at two opposite sides of the plurality of cells 122 in the first direction X. Each of the battery modules 120 includes a plurality of cells 122 that are arranged between two end plates 1211 in the first direction X.

In some embodiments, each of the battery modules 120 further includes a liquid cooling plate 123 and a cover plate 124. The liquid cooling plate 123 and the cover plate 124 are arranged at two opposite sides of the plurality of cells 122 in the height direction Z of the framework 110. The liquid cooling plate 123 is configured to cool the plurality of cells 122. Two opposite ends of the liquid cooling plate 123 in the first direction X are connected to the two end plates 1211, respectively. The liquid cooling plate 123 and the end plates 1211 can be fixedly connected by welding, screws, or the like. Two opposite ends of the cover plate 124 in the first direction X are connected to the two end plates 1211, respectively. The cover plate 124 and the end plates 1211 can be fixedly connected by welding, screws, or the like.

In some embodiments, each of the frames 121 includes two side plates (not shown in the figures) arranged opposite to each other in the second direction Y. Two angles are formed between the first direction X and the second direction Y, and between the height direction Z of the framework 110 and the second direction Y, respectively. One end of each of the two side plates is connected to one end of one of the two end plates 1211, and another end of each of the two side plates is connected to another end of another of the two end plates 1211, so that the two side plates and the two end plates 1211 enclose to form a cavity that accommodates the cells 122.

In some embodiments, each of the connecting parts 1213 of each of the connecting structures 1212 is disposed on one of the end plates 1211 and protrudes away from the cells 122. Since the end plates 1211 of each of the frames 121 have higher strength than other parts of each of the frames 121, they are less prone to deformation. By setting each of the connecting parts 1213 of each of the connecting structures 1212 disposed on one of the end plates 1211 and protruding away from the cells 122, the connection stability of the battery modules 120 and the framework 110 can be further improved.

In some embodiments, each of the connecting parts 1213 is integrally connected to one of the end plates 1211, further improving the connection stability of the connecting parts 1213 and the end plates 1211, enabling the connection strength of the connecting parts 1213 and the end plates 1211 to be higher, and further improving the connection stability of the battery modules 120 and the framework 110. For example, the connecting parts 1213 and the end plates 1211 may be integrally connected by welding or formed by a single process. Alternatively, the connecting parts 1213 and the end plates 1211 may be fixedly connected by bolts, snapping, or the like.

Specifically, each of the connecting parts 1213 includes a plurality of connecting protrusions 1214 disposed on one of the end plates 1211 and protruding away from the cells 122. The plurality of connecting protrusions 1214 are arranged in the second direction Y. In some embodiments, the plurality of connecting protrusions 1214 may be arranged in sequence or distributed in misalignment in the second direction Y.

In some embodiments, the framework 110 includes a supporting beam 111 extending in the second direction Y. Each of the supporting parts 1131 is disposed at a side of the supporting beam 111 facing the mounting cavity 1100. Two angles are formed between the first direction X and the second direction Y, and between the height direction Z of the framework 110 and the second direction Y, respectively. For example, the above two angles may be a right angle or an acute angle. In some embodiments, each of the supporting parts 1131 includes a plurality of supporting protrusions 1132 disposed on the supporting beam 111 and protruding towards the mounting cavity 1100. The plurality of supporting protrusions 1132 are arranged in the second direction Y. For example, the plurality of supporting protrusions 1132 may be arranged in sequence or distributed in misalignment in the second direction Y. The number of the plurality of connecting protrusions 1214 is equal to the number of the plurality of supporting protrusions 1132, and the plurality of connecting protrusions 1214 are connected to the plurality of supporting protrusions 1132 in one-to-one correspondence, so that the connecting parts 1213 is connected to the supporting parts 1131.

In some embodiments, each of the supporting parts 1131 is integrally connected to the supporting beam 111, or each of the supporting parts 1131 is fixedly connected on the supporting beam 111 by bolts, snapping, or the like. The former can further improve the connection stability of the supporting parts 1131 and the supporting beam 111, and enhance the strength of the supporting parts 1131.

In some embodiments of the disclosure, the connecting structures 1212 are disposed above the supporting structures 1130; alternatively, the connecting structure 1212 are disposed below the supporting structured 1130; and alternatively, the connecting structures 1212 and the supporting structures 1130 are alternately arranged in the first direction X or the second direction Y, so that the connecting structures 1212 are stably connected to the supporting structures 1130. By disposing the connecting structures 1212 above or below the supporting structures 1130, it is conducive to reducing the width of the framework 110 in the first direction X.

In some embodiments, as illustrated in FIGs. 2 to 4, the connecting parts 1213 of each of the connecting structures 1212 are disposed above or below the supporting parts 1131 of each of the supporting structures 1130, and each of the connecting parts 1213 is fixedly connected to one of the supporting parts 1131 by a locking member 140, in which the locking member 140 passes through each of the connecting parts 1213 and one of the supporting parts 1131.

In some embodiments, the framework 110 includes a plurality of limiting structures 114 arranged in sequence in the height direction Z of the framework 110. The plurality of limiting structures 114 are arranged in one-to-one correspondence with the plurality of battery modules 120. Each of the limiting structures 114 includes two limiting parts 1141 respectively arranged at two opposite sides of one of the frames 121 in the first direction X. The two limiting parts 1141 abut against two opposite sides of one of the frames 121 in the first direction X, respectively, thereby limiting the deformation of the frames 121 in the first direction X, and further limiting the expansion deformation of the cells 122 in the first direction X.

The two end plates 1211 of the framework 110 are arranged opposite to each other in the first direction X. The two limiting parts 1141 abut against the two end plates 1211, respectively, thereby preventing the end plates 1211 from being compressed by the cells 122 in the situation where the cells 122 expand and deform, and thus avoiding significant bending deformation of the end plates 1211.

In some embodiments, each of the limiting parts 1141 abuts against a middle part of one of the end plates 1211 in the second direction Y, further improving the limiting effect of the limiting parts 1141 on the deformation of the end plates 1211. Specifically, each of the limiting parts 1141 is disposed at a side of the supporting beam 111 facing the mounting cavity 1100, and at the middle part of the supporting beam 111 in the second direction Y, so that each of the limiting parts 1141 abut against the middle part of one of the end plates 1211 in the second direction Y. In some embodiments, each of the limiting parts 1141 and the supporting beam 111 are integrally connected, or fixedly connected by bolts, snapping, or the like. Of course, the former can further improve the connection stability of each of the limiting parts 1141 and the supporting beam 111, enhance the strength of the supporting parts 1131, and further improve the limiting effect of the limiting parts 1141 on the end plates 1211.

In some embodiments, as illustrated in FIG. 5, a first mounting opening 1101 is provided at the top of the framework 110 and communicated with the mounting cavity 1100. The first mounting opening 1101 is configured to allow the topmost one of the plurality of battery modules 120 to be installed in the mounting cavity 1100, so as to facilitate the mounting of the topmost one of the battery modules 120 in the mounting cavity 1100.

Since a plurality of crossbeams 112 are provided around the top of the framework 110, when the topmost one of the battery modules 120 is installed in the mounting space of the framework 110 in the first direction X or the second direction Y, the mounting will be interfered by the crossbeams 112, resulting in inconvenient mounting of the battery modules 120. By providing the first mounting opening 1101 communicating with the mounting cavity 1100 at the top of the framework 110, when the topmost one of the battery modules 120 is installed from the first mounting opening 1101 into the mounting cavity 1100, it will not be interfered by the crossbeams 112, thereby making the mounting of the topmost one of the battery modules 120 more convenient.

In some embodiments, the connecting structure 1212 of the topmost one of the battery modules 120 is disposed above corresponding one of the supporting structures 1130. Therefore, when the topmost one of the battery modules 120 is installed from the first mounting opening 1101 into the mounting cavity 1100, the connecting structure 1212 of the topmost one of the battery modules 120 can be directly placed above corresponding one of the supporting structures 1130. Without the need for other tools to position the battery modules 120, the connecting structure 1212 can be easily connected to corresponding one of the supporting structures 1130, which facilitates the operation.

In some embodiments, a second mounting opening 1102 is provided at the bottom of the framework 110 and communicated with the mounting cavity 1100. The second mounting opening 1102 is configured to allow the bottommost one of the plurality of battery modules 120 to be installed in the mounting cavity 1100, so as to facilitate the mounting of the bottommost one of the battery modules 120 in the mounting cavity 1100.

Since the plurality of crossbeams 112 are provided around the bottom of the framework 110, when the bottommost one of the battery modules 120 is installed in the mounting space of the framework 110 in the first direction X or the second direction Y, the mounting will be interfered by the crossbeams 112, resulting in inconvenient mounting of the battery modules 120. By providing the second mounting opening 1102 communicating with the mounting cavity 1100 at the bottom of the framework 110, when the bottommost one of the battery modules 120 is installed from the second mounting opening 1102 into the mounting cavity 1100, it will not be interfered by the crossbeams 112, thereby making the mounting of the bottommost one of the battery modules 120 more convenient.

In some embodiments, the connecting structure 1212 of the bottommost one of the battery modules 120 is disposed below and connected to corresponding one of the supporting structures 1130. Therefore, when the bottommost one of the battery modules 120 is installed from the second mounting opening 1102 into the mounting cavity 1100, the connecting structure 1212 of the bottommost one of the battery modules 120 can be directly connected to corresponding one of the supporting structures 1130 below. Without the need for other tools to position the battery modules 120, the connecting structure 1212 can be easily connected to corresponding one of the supporting structures 1130, which facilitates the operation.

In some embodiments, as illustrated in FIG. 5, a third mounting opening 1103 is provided at a side of the framework 110 in the second direction Y and communicated with the mounting cavity 1100. The third mounting opening 1103 is configured to allow other battery modules 120 except for the topmost one and the bottommost one to be installed in the mounting cavity 1100. Therefore, it is convenient to install other battery modules 120 except for the topmost one and the bottommost one of the battery modules 120 from the third mounting opening 1103 into the mounting cavity 1100. In some embodiments, each of the connecting structures 1212 of the battery modules 120 installed from the third mounting opening 1103 into the mounting cavity 1100 can be connected below or above corresponding one of the supporting structures 1130, and the disclosure does not limit on this.

In some embodiments, as illustrated in FIG. 1 and FIG. 2, each side of the framework 110 is provided with a sealing plate 130. A plurality of sealing plates 130 enclose to form a space with good sealability, so as to protect water pipes, wiring harnesses, and other components inside the framework 110, reduce the exposure of various components such as water pipes and wire harnesses, and reduce the risks of corrosion, loosening, or electric leakage of each component.

In some embodiments, the battery pack 100 further includes a connector (not shown in the figures) configured to be electrically connected to electrical devices. The connector is electrically connected to the plurality of battery modules 120, so that the plurality of battery modules 120 share one set of the connector, which is beneficial to reducing the cost of the battery pack. In some embodiments, electrical components (not shown in the figures) of the plurality of battery modules 120 are connected in series in sequence and then electrically connected to the connector; alternatively, the electrical components of the plurality of battery modules 120 are connected in parallel and then electrically connected to the connector. The connector may be arranged on the sealing plate 130 to facilitate the electrical connection between the electrical devices and the connector.

Some embodiments of the disclosure further provide a vehicle including the battery pack of any one of the above-mentioned embodiments. Since the vehicle adopts all the technical features in any one of technical solutions of the above embodiments, it has at least all the beneficial effects brought by the technical solutions of the above embodiments, which will not be repeated here.

In the vehicle including the battery pack 100 provided by some embodiments of the disclosure, the frame 121 of each of the battery modules 120 is provided with the connecting structure 1212, and the framework 110 is provided with the plurality of supporting structures 1130 arranged in the height direction Z of the framework 110, and the plurality of connecting structures 1212 of the plurality of frames 121 are connected to the plurality of supporting structures 1130 in one-to-one correspondence, so that the plurality of battery modules 120 are supported in the mounting cavity 1100 of the framework 1100. Moreover, since the frames 121 of the battery modules 120 have higher strength and are not prone to deformation under the gravity of the battery modules 120, it is conducive to improving the connection stability of the battery modules 120 and the framework 110. Additionally, because the battery modules 120 are supported by the framework 110 through the frames 121, the pressure on liquid cooling plates of the battery modules 120 is reduced, the risk of deformation of the liquid cooling plates is reduced, the stability of the liquid cooling plates is improved, and the safety performance of the vehicle is enhanced.

## Claims

1. A battery pack (100), **characterized in that** the battery pack (100) comprises:
a framework (110) comprising a mounting cavity (1100) and a plurality of supporting structures (1130), wherein the plurality of supporting structures (1130) are arranged in a height direction (Z) of the framework (110); and
a plurality of battery modules (120) arranged in the mounting cavity (1100) in the height direction (Z), wherein each of the plurality of battery modules (120) comprises a frame (121) and a plurality of cells (122) disposed in the frame (121); and the frame (121) is provided with a connecting structure (1212), wherein each of a plurality of connecting structures (1212) of a plurality of frames (121) is connected to one of the plurality of supporting structures (1130).

2. The battery pack (100) of claim 1, **characterized in that** each of the plurality of supporting structures (1130) comprises two supporting parts (1131) arranged at two opposite sides of the mounting cavity (1100) in a first direction (X), respectively, wherein an angle is formed between the first direction (X) and the height direction (Z); and
each of the connecting structures (1212) comprises two connecting parts (1213) arranged at two opposite sides of the frame (121) in the first direction (X), respectively, wherein the two connecting parts (1213) are connected to the two supporting parts (1131), respectively.

3. The battery pack (100) of claim 2, **characterized in that** the frame (121) comprises two end plates (1211) arranged opposite to each other, and the two end plates (1211) are arranged at two opposite sides of the plurality of cells (122) in the first direction (X), respectively; and each of the two connecting parts (1213) is disposed on one of the two end plates (1211) and protrudes away from the plurality of cells (122);
optionally, the frame (121) comprises two end plates (1211) arranged opposite to each other, and the two end plates (1211) are arranged at two opposite sides of the plurality of cells (122) in the first direction (X), respectively; and each of the two connecting parts (1213) is disposed on one of the two end plates (1211) and protrudes away from the plurality of cells (122), and each of the two connecting parts (1213) is integrally connected to one of the two end plates (1211).

4. The battery pack (100) of claim 2, **characterized in that** each of the two connecting parts (1213) comprises a plurality of connecting protrusions (1214) disposed on one of the two end plates (1211) and protruding away from the plurality of cells (122), and the plurality of connecting protrusions (1214) are arranged in a second direction (Y), wherein two angles are formed between the first direction (X) and the second direction (Y), and between the height direction (Z) and the second direction (Y), respectively; and
each of the two supporting parts (1131) comprises a plurality of supporting protrusions (1132) arranged in the second direction (Y), the number of the plurality of supporting protrusions (1132) is equal to the number of the plurality of connecting protrusions (1214), and the plurality of supporting protrusions (1132) are connected to the plurality of connecting protrusions (1214) in one-to-one correspondence.

5. The battery pack (100) of claim 2, **characterized in that** each of the two connecting parts (1213) is disposed above or below one of the two supporting parts (1131); and
the battery pack (100) further comprises a locking member (140) passing through and fixedly connecting each of the two connecting parts (1213) and one of the two supporting parts (1131).

6. The battery pack (100) of any one of claims 1 to 5, **characterized in that** the framework (110) is provided with a plurality of limiting structures (114) disposed on the supporting structures (1130), and the plurality of limiting structures (114) are arranged in one-to-one correspondence with the plurality of battery modules (120); and
each of the plurality of limiting structures (114) comprises two limiting parts (1141) abutting against two opposite sides of the frame (121) in a first direction (X), respectively.

7. The battery pack (100) of claim 6, **characterized in that** the frame (121) comprises two end plates (1211) arranged opposite to each other, and the two end plates (1211) are arranged at two opposite sides of the plurality of cells (122) in the first direction (X), respectively; and the two limiting parts (1141) abut against the two end plates (1211), respectively;
optionally, the frame (121) comprises two end plates (1211) arranged opposite to each other, the two end plates (1211) are arranged at two opposite sides of the plurality of cells (122) in the first direction (X), respectively, and the two limiting parts (1141) abut against the two end plates (1211), respectively; and each of the two limiting parts (1141) abuts against a middle part of one of the two end plates (1211) in a second direction (Y), wherein two angles are formed between the first direction (X) and the second direction (Y), and between the height direction (Z) and the second direction (Y), respectively.

8. The battery pack (100) of claim 6, **characterized in that** the framework (110) further comprises a supporting beam (111) extending in a second direction (Y), and one of the two limiting parts (1141) is disposed at a side of the supporting beam (111) facing the mounting cavity (1100), wherein two angles are formed between the first direction (X) and the second direction (Y), and between the height direction (Z) and the second direction (Y), respectively;
optionally, the framework (110) further comprises a supporting beam (111) extending in a second direction (Y), and one of the two limiting parts (1141) is disposed at a side of the supporting beam (111) facing the mounting cavity (1100), wherein two angles are formed between the first direction (X) and the second direction (Y), and between the height direction (Z) and the second direction (Y), respectively; and one of the two limiting parts (1141) is disposed at a middle part of the supporting beam (111) in the second direction (Y).

9. The battery pack (100) of any one of claims 1 to 5, **characterized in that** each of the plurality of supporting structures (1130) comprises two supporting parts (1131) arranged at two opposite sides of the mounting cavity (1100) in a first direction (X), respectively, the framework (110) further comprises a supporting beam (111) extending in a second direction (Y), and one of the two supporting parts (1131) is disposed at a side of the supporting beam (111) facing the mounting cavity (1100), wherein two angles are formed between the first direction (X) and the second direction (Y), and between the height direction (Z) and the second direction (Y), respectively; and
optionally, each of the plurality of supporting structures (1130) comprises two supporting parts (1131) arranged at two opposite sides of the mounting cavity (1100) in a first direction (X), respectively, the framework (110) further comprises a supporting beam (111) extending in a second direction (Y), and one of the two supporting parts (1131) is disposed at a side of the supporting beam (111) facing the mounting cavity (1100), wherein two angles are formed between the first direction (X) and the second direction (Y), and between the height direction (Z) and the second direction (Y), respectively; and one of the two supporting parts (1131) is integrally connected to the supporting beam (111).

10. The battery pack (100) of any one of claims 1 to 9, **characterized in that** a first mounting opening (1101) is provided at a top of the framework (110) and communicated with the mounting cavity (1100), and the first mounting opening (1101) is configured to allow a topmost one of the plurality of battery modules (120) to be installed in the mounting cavity (1100); and/or,
a second mounting opening (1102) is provided at a bottom of the framework (110) and communicated with the mounting cavity (1100), and the second mounting opening (1102) is configured to allow a bottommost one of the plurality of battery modules (120) to be installed in the mounting cavity (1100); and/or,
a third mounting opening (1103) is provided at a side of the framework (110) in a first direction (X) or a second direction (Y) and communicated with the mounting cavity (1100), and the third mounting opening (1103) is configured to allow the plurality of battery modules (120) to be installed in the mounting cavity (1100).

11. The battery pack (100) of claim 10, **characterized in that** the connecting structure (1212) of the topmost one of the plurality of battery modules (120) is disposed above corresponding one of the plurality of supporting structures (1130); and/or,
the connecting structure (1212) of the bottommost one of the plurality of battery modules (120) is disposed below corresponding one of the plurality of supporting structures (1130).

12. The battery pack (100) of any one of claims 1 to 5, **characterized in that** the plurality of cells (122) are stacked in the frame (121) of one of the battery modules (120) in the first direction (X).

13. The battery pack (100) of any one of claims 1 to 5, **characterized in that** each of the plurality of battery modules (120) comprises a liquid cooling plate (123) and a cover plate (124), and the liquid cooling plate (123) and the cover plate (124) are arranged at two opposite sides of the plurality of cells (122) in the height direction (Z), and the liquid cooling plate (123) is configured to cool the plurality of cells (122); and
the frame (121) comprises two end plates (1211) arranged opposite to each other, and the two end plates (1211) are arranged at two opposite sides of the plurality of cells (122) in a first direction (X), respectively; two opposite ends of the liquid cooling plate (123) in the first direction (X) are connected to the two end plates (1211), respectively; and two opposite ends of the cover plate (124) in the first direction (X) are connected to the two end plates (1211), respectively.

14. The battery pack (100) of any one of claims 1 to 5, **characterized in that** the plurality of supporting structures (1130) are arranged in sequence or distributed in misalignment in the height direction (Z);
optionally, each of the plurality of connecting structures (1212) is disposed above or below corresponding one of the plurality of supporting structures (1130).

15. A vehicle, **characterized in that** the vehicle comprises the battery pack (100) as claimed in any one of claims 1 to 14.
